# EUROPEAN PATENT APPLICATION

(11) **EP 1 956 533 A1**
(43) Date of publication of application: **13.08.2008**
(21) Application number: 07102101.8
(22) Date of filing: 09.02.2007
(51) Int. Cl.: G06Q 10/00

(54) **Electronic device and method of scheduling calendar events**

(71) Applicant: Research In Motion Limited, Waterloo, Ontario N2L 3W8 (CA)
(72) Inventor: May, Darrell Reginald, Waterloo Ontario N2V 2K6 (CA); Bredin, Robert, Guelph Ontario N1G 4R8 (CA); Hardy, Michael Thomas, Waterloo Ontario N2T 2J8 (CA)
(74) Representative: Rickard, David John

(57) **Abstract**

A method of scheduling a recurring calendar event using an electronic device includes receiving constraints for the recurring calendar event, determining an occurrence of the recurring calendar event, determining a free time period that meets the constraints, for scheduling a next occurrence of the recurring calendar event, and scheduling the next occurrence of the recurring calendar event during the free time period that meets the constraints.

## Description

The present disclosure relates generally to the scheduling of recurring events at an electronic device.

Portable electronic devices including, for example, smart telephones and wireless PDAs are becoming increasingly common and typically integrate functions of personal information management such as calendaring and data communications such as e-mail, World Wide Web browsing and telecommunications in a single device. Such devices run on a wide variety of networks from data-only networks such as Mobitex and DataTAC to complex voice and data networks such as GSM/GPRS, CDMA, EDGE, UMTS and CDMA2000 networks.

It is common for individuals to use such portable electronic devices for storing calendar events for display on the device in an electronic calendar. Some portable electronic devices also allow the user of the device to schedule meetings with invitees by creating a new calendar event and entering information such as the time of the meeting, the location and contact information of the invitees. An electronic message is then sent to the invitees in the form of an invitation to the meeting, typically via electronic mail (e-mail).

Recurring events are commonly scheduled by providing date and time information for each occurrence of the recurring event. Unfortunately, conflicts often arise when scheduling recurring events as one or more occurrence of a recurring event can conflict with other scheduled calendar events. Further, the problem of conflicts arising is compounded when recurring events are scheduled for groups of people, for example, for meetings.

Improvements in scheduling recurring calendar events are desirable.

### GENERAL

According to one aspect, there may be provided a method of scheduling a recurring calendar event using an electronic device includes receiving constraints for the recurring calendar event, determining an occurrence of the recurring calendar event, determining a free time period that meets the constraints for scheduling a next occurrence of the recurring calendar event, and scheduling the next occurrence of the recurring calendar event during the free time period that meets the constraints.

According to another aspect, there may be provided a portable electronic device for scheduling a recurring calendar event. The portable electronic device may include a housing, a display device mounted within the housing, a user input mounted within the housing, a memory mounted within the housing, a microprocessor within the housing and connected to the memory, the user input, and the display device, and an application. The application may be for execution by the microprocessor for receiving constraints for a recurring calendar event, determining an occurrence of the recurring calendar event, determining a free time period that meets the constraints for scheduling a next occurrence of the recurring calendar event, and scheduling the next occurrence of the recurring calendar event during the free time period that meets the constraints.

According to another aspect, there may be provided a computer program product for an electronic device. The computer program product may include a computer-readable medium having computer-readable code embodied therein for receiving constraints for a recurring calendar event, determining an occurrence of the recurring calendar event, determining a free time period that meets the constraints for scheduling a next occurrence of the recurring calendar event, and scheduling the next occurrence of the recurring calendar event during the free time period that meets the constraints.

Advantageously, a recurring calendar event may be scheduled based on user-defined criteria and based on free time in which other calendared events are not scheduled. The recurring calendar event can also be scheduled based on calendars of other invitees such that the recurring event is scheduled to allow a maximum number of invitees to attend by determining an appropriate time slot in which the calendars for a maximum number of invitees, are free of any other calendared events. Further, a target time can be set for the recurring event so that the recurring event is scheduled in the closest appropriate time slot. According to one aspect, a prompt is provided for user confirmation of the scheduled event.

### BRIEF DESCRIPTION OF THE DRAWINGS

The embodiments described herein will be better understood with reference to the description and to the following Figures, in which:

Figure 1 is a functional block diagram of a radio communication system including portable electronic devices and a communication system having an enterprise server according to one embodiment of the present application;

Figure 2 is a front view of an exemplary portable electronic device for use with the radio communication system of Figure 1, according to an embodiment;

Figure 3 is a block diagram of certain components, including internal components within the portable electronic device of Figure 2;

Figure 4 is an exemplary menu screen displayed on a display of the portable electronic device of Figure 2;

Figure 5 is a flowchart showing the steps in a method of scheduling calendar events according to an embodiment;

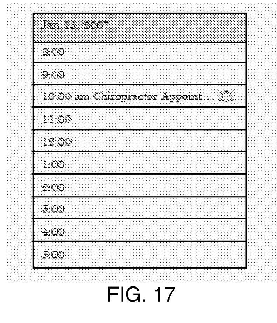

Figures 6 to 17 show exemplary screens displayed on the display of the portable electronic device at various steps and substeps in the method of Figure 5;

Figure 18 is a flowchart showing the steps in a method of scheduling calendar events according to an embodiment;

Figures 19 to 21 show exemplary screens displayed on the display of the portable electronic device at steps in the method of Figure 18;

Figure 22 is a flowchart showing the steps in a method of scheduling calendar events according to another embodiment;

Figures 23 and 24 how exemplary screens displayed on the display of the portable electronic device at steps in the method of Figure 22; and

Figure 25 is a front view of an exemplary portable electronic device, according to another embodiment.

### DESCRIPTION OF PREFERRED EMBODIMENTS

In the following description, specific details are set forth for the purpose of thorough understanding and explanation of embodiments of the present application. It will be understood, however, that the present application is not limited to the specific details set forth herein. Those skilled in the art will recognize that certain features can vary from those described herein.

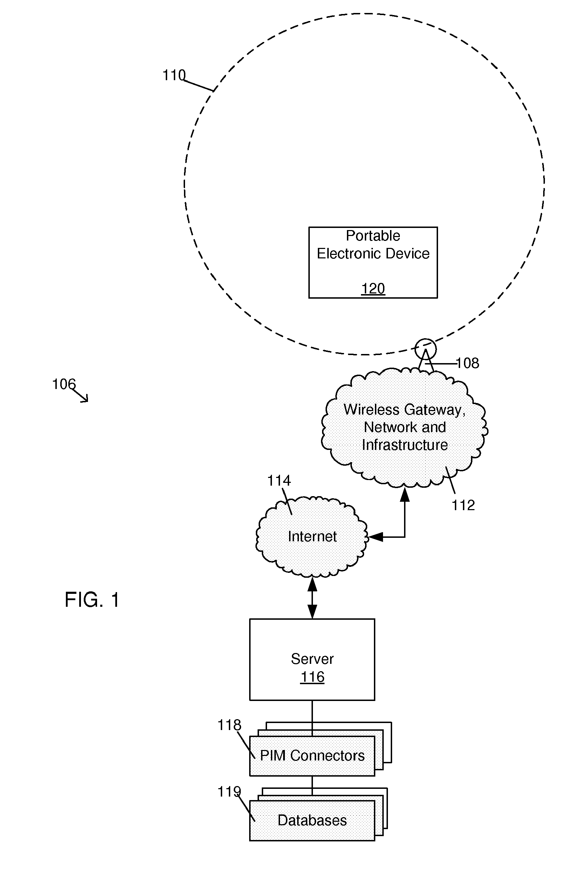

Reference is first made to Figure 1 which shows a functional block diagram of a radio communication system indicated generally by the numeral 106 and a portable electronic device 120. The radio communication system 106 provides for communications with portable electronic devices including the exemplary portable electronic device 120, as shown. The portable electronic device 120 and the radio communication system 106 are operable to effect over-the-air communications therebetween via a radio communications channel. Data originating at the portable electronic device 120 is communicated to the radio communication system 106 by way of the radio communications channel. Similarly, data originating at the radio communication system 106 is communicated from the radio communication system 106 to the portable electronic device 120 by way of the radio communications channel, thereby providing data to the portable electronic device 120.

For the purposes of illustration, the communication system 106 is functionally represented in Figure 1 and a single base station 108 is shown. The base station 108 defines a coverage area, or cell 110 within which communications between the base station 108 and the portable electronic device 120 can be effectuated. It will be appreciated that the portable electronic device 120 is movable within the cell 110 and can be moved to coverage areas defined by other cells that are not illustrated in the present example. In the present example, the base station 108 and wireless gateway, network and infrastructure 112 are part of, for example, a data-only network such as Mobitex or DataTAC, or a complex voice and data network such as a GSM/GPRS, CDMA, EDGE, UMTS or CDMA2000 network. The base station 108 is connected to an enterprise server 116 via the wireless gateway, network and infrastructure 112 and via the internet 114.

The enterprise server 116 is also functionally coupled through personal information management connectors 118 to databases 119. The personal information management connectors 118 interface between the server 116 and respective databases 119. It will be understood that the personal information management connectors 118 are functional components and can be provided by way of an application on the enterprise server 116. The databases of the present example are of a text format such as an Extensible Mark-up Language (XML) format. Each database to which a user has access, is connected through a respective one of the personal information management connectors 118. The data maintained in one of the databases 119 includes a number of data records such as calendar event data records.

For the purposes of illustration, a single cell is shown. It will be appreciated that the present application is not limited to a single cell and that the portable electronic device 120 can be located within or moved to coverage areas defined by other cells (not shown).

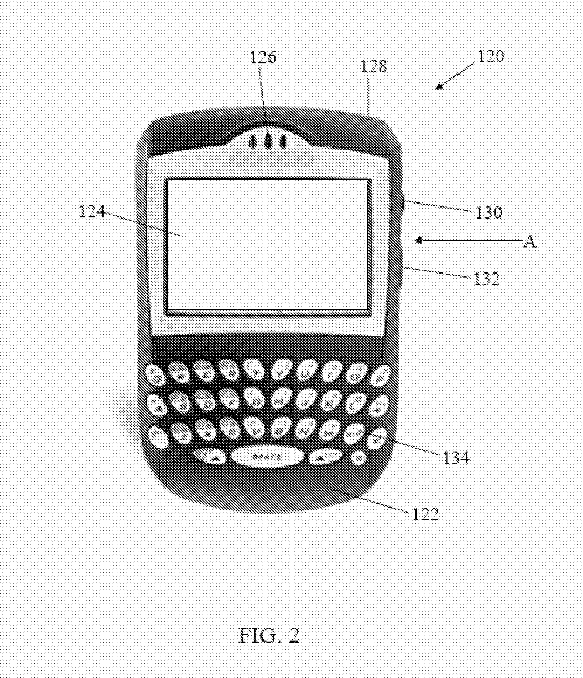

Referring now to Figure 2, an exemplary portable electronic device 120 in accordance with an embodiment is shown. In the present embodiment, the portable electronic device 120 is based on the computing environment and functionality of a hand-held wireless communication device. It will be understood, however, that the electronic device is not limited to a hand-held wireless communication device. Other electronic devices are possible, such as cellular telephones, smart telephones, laptop computers and desktop computers. Referring again to the present embodiment, the portable electronic device 120 includes a housing 122 that frames an LCD display 124, a speaker 126, an LED indicator 128, a trackwheel 130, an exit key 132, a keypad 134, and a microphone 136. The trackwheel 130 and the exit key 132 can be inwardly depressed along the path of arrow "A" as a means to provide additional user-input. The housing 122 is made from a suitable material as will occur to those skilled in the art and can be stored, for example, in a holster (not shown) that includes an attachment for attaching to a user's belt.

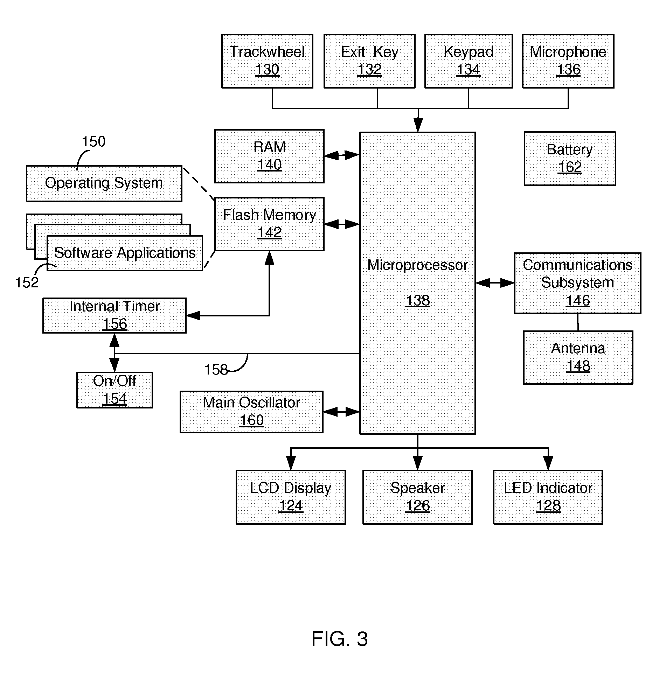

Referring now to Figure 3, a block diagram of certain components, including internal components within the portable electronic device 120, is shown. The portable electronic device 120 is based on a microcomputer that includes a microprocessor 138 connected to a random access memory (RAM) unit 140 and a persistent storage device, which in the present embodiment is a flash memory 142 that is responsible for various non-volatile storage functions of the portable electronic device 120. Operating system software 150 executable by the microprocessor 138 is stored in the flash memory 142. It will be appreciated, however, that the operating system software 150 can be stored in other types of memory such as read-only memory (ROM). In the present embodiment, software applications 152 including Personal Information Manager (PIM) applications are stored in the persistent storage device 142 for execution by the microprocessor 138 for carrying out various functions. The flash memory 142 of the portable electronic device 120 also includes databases that correspond to ones of the databases 119 of the communication system 16. The microprocessor 138 receives input from various input devices including the trackwheel 130, the exit key 132, and the keypad 134, and outputs to various output devices including the LCD display 124, the speaker 126 and the LED indicator 128. The microprocessor 138 also interacts with on/off circuitry 154 for powering up the portable electronic device 120 and powering down the portable electronic device 120, and an internal timer 156.

In the present embodiment, the portable electronic device 120 is a two-way RF communication device having voice and data communication capabilities. The portable electronic device 120 also includes Internet communication capabilities. Two-way RF communication is facilitated by a communications subsystem 146 and antenna 148 that are used to connect to and operate with the communication system 106 shown in Figure 1.

As indicated above, the flash memory 142 stores a plurality of applications executable by the microprocessor 138 that enable the portable electronic device 120 to perform certain operations including the communication operations referred to above. Applications software is provided including, for example, PIM applications such as an electronic mail (messages) application, an address book application, a tasks application, and a calendar application, as well as other applications such as a Web browser application, an options application and a profiles application.

In a data communication mode, a received signal such as a text message or Web page download is processed by the communications subsystem 146 and input to the microprocessor 138 for further processing of the received signal for output to the LCD display 124. A user of the portable electronic device 120 can also compose data items within a software application such as an e-mail messaging application using the keypad 134, for example, in conjunction with the trackwheel 130 and the LCD display 124. Such composed items can then be transmitted over the communications network through the communications subsystem 146 and antenna 148.

Although not shown, a short-range communications subsystem can also be provided for communication between the portable electronic device 120 and other devices or systems. Such short-range communications subsystems include, for example, an infrared device as well as associated components and circuitry, and a Bluetooth^{™} communication system.

A rechargeable battery 162 such as a Li-ion battery is provided for powering the portable electronic device 120.

The user can power down the portable electronic device 120 to a power-off or low-power state by pressing a power on/off button (not shown). Alternatively, the device can be powered up or powered down using a combination of buttons that activate the on/off circuitry 154. As indicated above, the portable electronic device 120 includes an internal timer 156 that can also deliver an interrupt on the interrupt line 158 to power up the portable electronic device 120 when the portable electronic device 120 is in a power-down state and to power down the device when the portable electronic device 120 is in the power-up state. The internal timer 156 is responsible for keeping track of the date and time when the portable electronic device 120 is turned off. A main oscillator 160 is also provided for generating a relatively high-frequency (MHz) clock signal compared to that generated by the oscillator that is part of the internal timer 156 (tens of kHz). The main oscillator 160 includes circuitry that operates when the portable electronic device is on for providing a clock signal to the microprocessor 138 and other components.

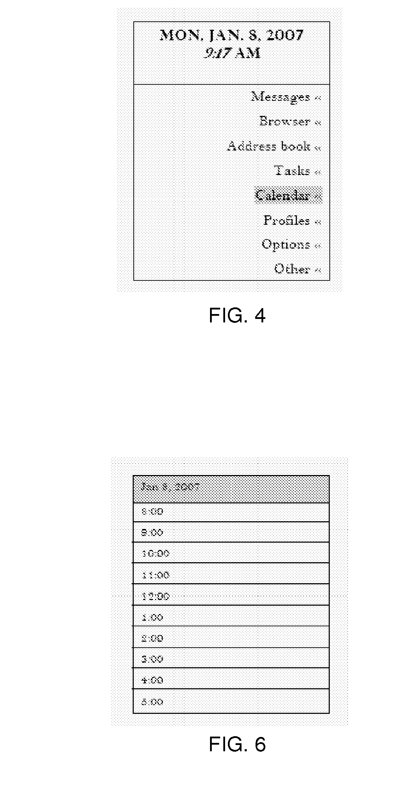

Referring to Figure 4, there is shown an exemplary menu screen that is displayed on the LCD display 124 of the portable electronic device 120. The exemplary menu screen includes a display clock that is updated according to the circuitry of the main oscillator 160 and a list of applications including an electronic mail (Messages) application, a Web browser, an Address book, a Tasks application, a Calendar application, a Profiles application and an Options application. Each of the displayed applications in the list is selectable by, for example, scrolling to the desired application using the trackwheel 130 and pressing inwardly on the trackwheel 130 in the direction of arrow "A".

It will be appreciated that the Calendar application is used for providing a graphical user interface (GUI) for the user to create calendar events and for storage of the calendar events in a database at the flash memory 142, when executed by the processor 138. The Calendar application is used for creating, displaying and storing calendar events such as appointments, lectures, exams, movies, meetings, performances, dinners, ceremonies, etc. Each calendar event includes a variety of information including a name, a date and time of the event as well as a user-selectable reminder time for the event. For example, the calendar event can include a reminder such as an audible alarm, a visual alarm or even a kinetic alarm such as a vibration, set for a user-selected time prior to the start time of the event to thereby remind the user of the event. The calendar events are viewed using a calendar view in the Calendar application. The calendar view can be any one of a month view, a week view, a day view and an agenda view. Selection of a calendar event in the calendar view results in display of the particulars of that event.

The Messages application is used for data communication between electronic devices, in the form of, for example, SMS (Short Message Service) messages or e-mail messages. A user of the portable electronic device 120 can compose, for example, e-mail messages within the Messages application using the keypad 134, for example, in conjunction with the trackwheel 130 and the LCD display 124. Such composed messages can then be transmitted over the wireless gateway, network and infrastructure 112, through the use of the communications subsystem 146 and antenna 148. Similarly, messages, such as e-mail messages, can be received at the portable electronic device 120, via the antenna 148 and communications subsystem 146, further processed at the microprocessor 138 for display on the LCD display 124 using the Messages application.

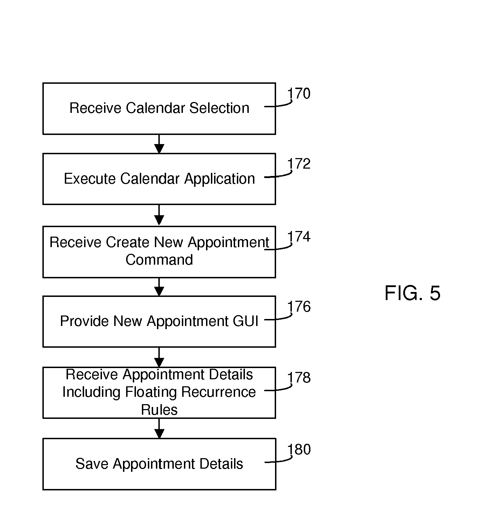

A method of scheduling calendar events will now be described with reference to Figure 5, in accordance with an aspect of one embodiment. It will be appreciated that the steps described in relation to Figure 5 are carried out by routines or subroutines of the portable electronic device 120. Coding of software for carrying out such steps is well within the scope of a person of ordinary skill in the art. The method includes receiving constraints for the recurring calendar event, determining an occurrence of the recurring calendar event, determining a free time period that meets the constraints for scheduling a next occurrence of the recurring calendar event, and scheduling the next occurrence of the recurring calendar event during the free time period that meets the constraints. Referring to Figure 5, the portable electronic device 20 receives the calendar application selection at step 170 and, in response, the calendar application is executed on the portable electronic device at step 172. A new calendar event command is then received at the portable electronic device upon user-selection of a new calendar event option in the calendar application at step 174. In response to receipt of the new calendar event command, a new calendar event graphical user interface (GUI) is provided at step 176 and the user enters the calendar event details including setting a recurrence option and defining recurrence constraints at step 178. The calendar event details are then saved at step 180.

The following example is provided for the purpose of illustration only and is not intended to limit the scope of the present application. As indicated above, Figure 4 shows an exemplary menu screen that is displayed on the LCD display 124 of the portable electronic device 120. Selection of the Calendar application from the exemplary menu screen of Figure 4 by, for example, scrolling to the Calendar application using the trackwheel 130, and pressing inwardly on the trackwheel 130 in the direction of arrow "A", results in receipt of the selection at the microprocessor 138 (step 170), causing the execution of the calendar application (step 172). Execution of the calendar application results in the display of a default calendar view, as shown in Figure 6. In the example shown in Figure 6, the default calendar view is the day view. It will be appreciated that other views such as the week, month or agenda view can be displayed depending on the default view or can be selected for display. In the calendar view, calendar events such as meetings or appointments that are calendared within a time period that falls within the calendar view and are saved in the flash memory 142, are displayed on the LCD display 124 of the portable electronic device 120. In the present example, there are no calendar events scheduled between 8:00 a.m. and 5:00 p.m. for the date displayed.

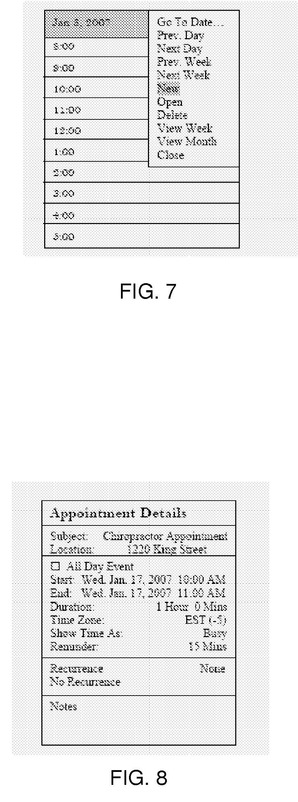

A user of the portable electronic device 20 wishes to schedule a calendar event using constraints defined by user-input rules for scheduling a recurring calendar event. In the present example, the user wishes to schedule a recurring appointment on a monthly basis. To schedule the calendar event using the portable electronic device 120, the user presses inwardly on the trackwheel 30 in the direction of arrow "A", resulting in the display of the submenu of user-selectable options, as shown in Figure 7. These options include, for example, "Go To Date", "Prev Day", "Next Day", "Prev Week", "Next Week", "New", "Open", "Delete", "View Week", "View Month", "View Agenda", "View Shared Calendars", "Options" and "Close". Selection of the "Go To Date" option provides a user-editable date field for the user to specify a date for displaying on the LCD display 124. Selection of the "Prev Day" option results in the display of the schedule for the day prior to that displayed in Figure 6. Similarly, selection of the "Next Day" option results in the display of the schedule for the day following that displayed in Figure 6. Selection of the "Prev Week" option results in the display of the schedule for the week prior to the day displayed in Figure 6. Selection of the "Next Week" option results in the display of the schedule for the week following the day displayed in Figure 6. Selection of the "New" option provides a graphical user interface for composition of a new event for addition to the calendar display. Selection of the "Open" option results in the display of details of any selected calendar event on the LCD display 124. Selection of the "Delete" option deletes a selected calendar event. Selection of the "View Week" option results in the display of the weekly schedule for the week including the day displayed in Figure 6. Selection of the "View Month" option results in the display of the monthly schedule for the month including the day displayed in Figure 5. Selection of the "Close" option closes the Calendar application.

As indicated above, selection of the "New" option from the submenu displayed in Figure 7 acts as a create new calendar event command (step 174) and provides a graphical user interface for composition of a new calendar event for addition to the calendar display (step 176). An exemplary graphical user interface for composition of a new calendar event is show in Figure 8. The exemplary graphical user interface shown in Figure 8 includes fields for user-entry of event details, many of such fields are shown populated with data entered by the meeting organizer using the input devices such as the trackwheel 130 and the keypad 134 in Figure 8. These fields include, for example, a "Subject", a "Location", a "Start" field, an "End" field, a "Duration", a "Time Zone", a Show Time As" field, a "Reminder" field, a "Recurrence" field and "Notes". In the example shown in Figure 8, event details are received by user entry (step 178). These event details include, for example, the subject "Chiropractor Appointment", the location "1220 King Street", a start date and time, an end date and time and a duration, as indicated in Figure 8. The time zone is EST (Eastern Standard Time) and a reminder is set for 15 minutes prior to the start time of the appointment.

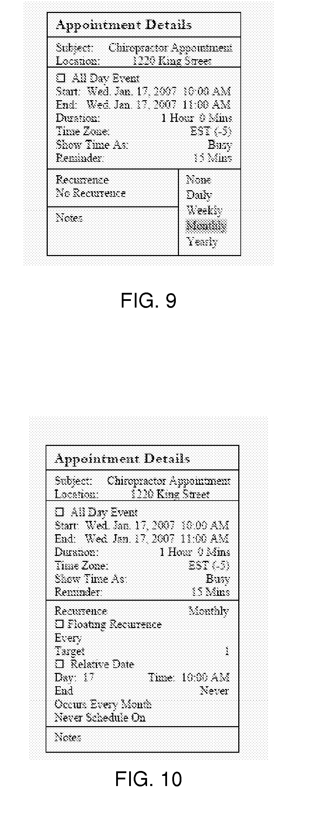

The user populates the fields with the appropriate information and sets the recurrence field on by setting to a monthly recurrence. This can be accomplished by, for example, pressing inwardly on the trackwheel 130 , resulting in the display of the submenu as shown in Figure 9 followed by scrolling to the "Monthly" option and pressing inwardly on the trackwheel 130 again to select the "Monthly" recurrence setting. In the present example, selection of the monthly recurrence results in the display of further recurrence options, as shown in Figure 10. Many of the exemplary screen shots shown in the present application differ in size and, in particular, in the vertical dimension. It is possible that certain exemplary screens shown are too long to be displayed on the device at any one time. Scrolling using the trackwheel 130, for example, can be used to view all of fields in such exemplary screen shots. Thus, for example, the user may need to scroll downwardly to view the notes in the exemplary screen shown in Figure 10.

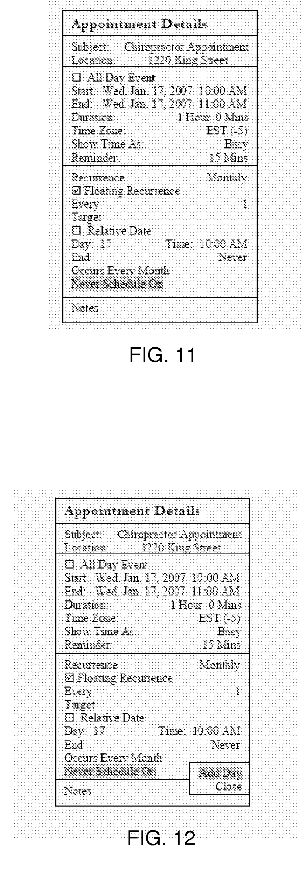

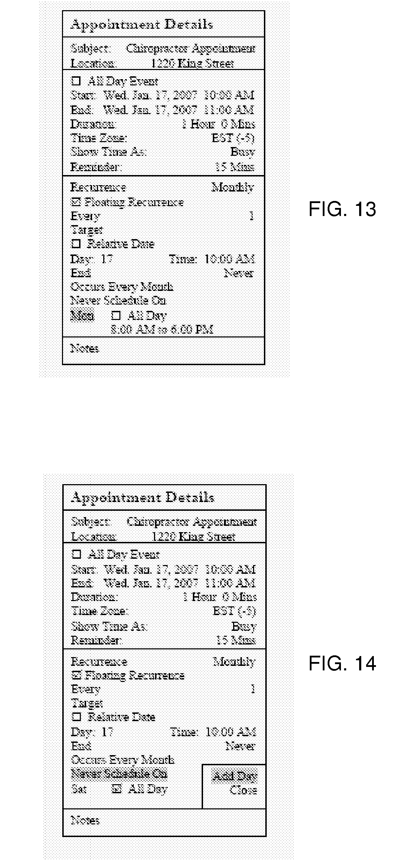

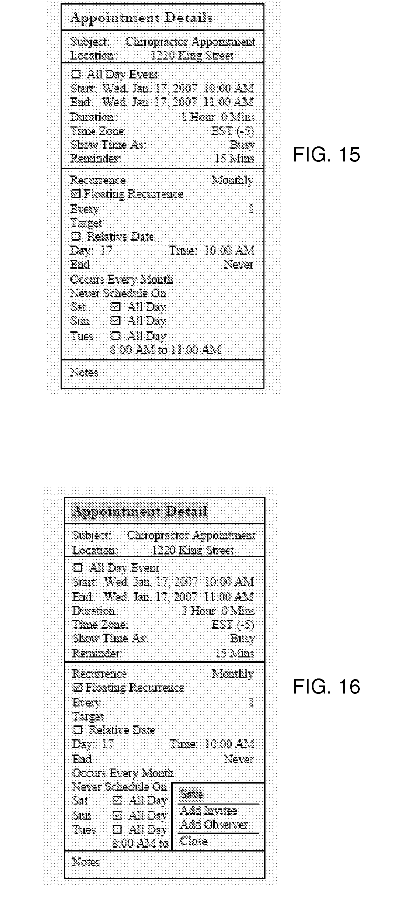

Next, the user selects the "Floating Recurrence" option as shown in Figure 11 with the frequency ("Every") field set to 1 for recurrence every month. The recurrence constraints are then set by selecting a target date and time, which is set as the 17^{th} of each month at 10:00 AM. Further recurrence constraints are set by selection of rules for recurrence including selection of a "Never Schedule On" option from the new calendar event GUI, as shown in Figure 11, followed by selection of an "Add Day" option from the resulting submenu, as shown in Figure 12. In response to selection of the "Add Day" option, a new day and time is displayed in the "Never Schedule On" field. The day is user-selectable to any day of the week and the entire day can be selected or a limited duration of time during that day can be defined, as shown in Figure 13. In the example shown in Figure 14, the user has set a constraint such that the recurring event is never scheduled on a Monday for the entire day ("All Day"). As shown in Figure 15, another constraint is added such that the recurring event is not scheduled Tuesdays between 8:00Am and 11:00AM. It will be appreciated that the constraints shown are provided for exemplary purposes only. Other constraints may be set and other ways of defining constraints are possible. It will be appreciated that with the floating recurrence set, recurring occurrences of the event are scheduled at or close to the user-defined target time while adhering to the user-defined rules for recurrence.

After entry of all the calendar event details, the calendar event is saved by, for example, selection of a save option from a menu as shown in Figure 16. Thus, the new calendared event is displayed in the appropriate time frame according to the date and time defined start field and end field as shown in each of Figures 8 to 16. In the present example, the first occurrence of the recurring calendar event is scheduled for January 17, 2007, beginning at 10:00 AM.

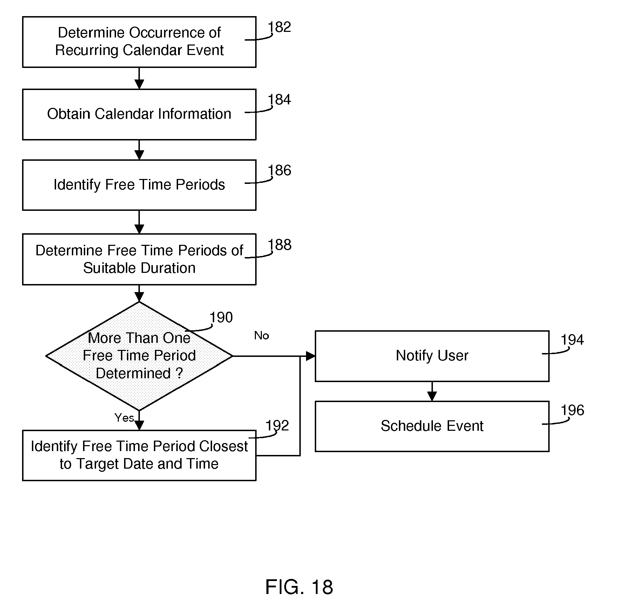

Reference is now made to Figure 18 to describe a method of scheduling a recurring calendar event according to another aspect of an embodiment. It will be appreciated that the steps described in relation to Figure 18 are carried out by routines or subroutines of the portable electronic device 120. Coding of software for carrying out such steps is well within the scope of a person of ordinary skill in the art. First, the portable electronic device 120 determines the occurrence of a recurring event based on the current time according to the clock signal from the main oscillator 160 at step 182. The determination of the occurrence of the calendar event can be the determination of the start of the occurrence of the calendar event. Alternatively, the determination of the occurrence of the calendar event can be the determination of the end of the occurrence of the calendar event, or any other suitable time such as during or after the calendar event. Upon the determination at step 182, calendar information is retrieved from the calendar database stored in flash memory 142 at the portable electronic device 120. The calendar information retrieved includes calendar information for calendar events surrounding the target date and time for the next occurrence of the recurring calendar event at step 184. For example, all calendar events scheduled within a specific time period such as within two days of the target date and time for the next occurrence of the recurring calendar event can be retrieved. Free time periods within the specific time period such as within two days of the target date and time that accord with the user-defined constraints are determined at step 186.

The free time periods are determined by determining all the time periods during which there are no scheduled calendar events and during which there is no conflict with a user-defined constraint, beginning at the start date and time of the specific time period and ending at the end date and time of the specific time period. It will be appreciated that the free time periods can be calculated for the entire duration of the specific time period or can be calculated only during a defined calendar day (between a beginning and end time of each calendar day based on user-defined calendar day parameters). The free time periods are determined by determining the start date and time of each free time period based on the start date and time of the specific time period, the start date and time of each calendar day, the end date and time of each non-conflicting calendared event or user-defined constraint and the last end date and time of conflicting calendared events and user-defined constraints. The end date and time of each free time period is then determined by determining the next one of a start date and time of a calendared event or user-defined constraint, an end date and time of a calendar day and the end date and time of the specific time period, after the start date and time for each free time period. It will be appreciated that the user-defined constraints are treated in a similar manner to calendar events in that the user-defined time periods for not scheduling events are not considered to be free time.

The duration of each free time period is then determined by, for example, subtracting the start date and time of each free time period from the respective end date and time. The duration of each free time period is then compared to the user-defined duration of the recurring calendar event to determine those free time periods that are greater in length or equal in length to the user-defined duration of the recurring calendar event (step 188).

Next it is determined if there is more than one free time period determined at step 188 to be greater or equal in length to the duration of the recurring calendar event (step 190). If there is only one free time period, a notification is provided for the next occurrence of the recurring calendar event, with a suggested time within the free time period identified at step 188 that is closest to the user-defined target date and time at step 194. If there is more than one free time period determined at step 188, the free time period that is closest to the user-defined target date and time is determined at step 192.
A notification is then provided at step 194 by, for example, providing a visual prompt to the user for confirmation, thereby providing a suggested date and time for the next occurrence of the recurring calendar event. The next occurrence of the recurring calendar event is scheduled when the user confirms the suggested date and time of the calendar event from the visual prompt (step 196). The user is also given the opportunity to edit or discard the suggested next occurrence of the recurring calendar event. It will be appreciated from the foregoing that when there is an occurrence of the recurring calendar event, for example, at the start of the occurrence of the calendar event or at the end of the occurrence of the calendar event, the next occurrence of the event is scheduled.

A specific example will now be described with reference to Figure 18. This example is continued from the previous example described with reference to Figure 5, is provided for the purpose of illustration only and is not intended to limit the scope of the present application. In the present example, it is determined at step 182 that the current date and time according to the clock signal from the main oscillator 160 of the portable electronic device 120 is equivalent to the start date and time of the appointment saved at step 180, as shown in Figure 16. Thus, the occurrence of the "Chiropractor Appointment" is determined at the start date and time, Wed. Jan. 17, 2007.

Upon determination of the occurrence of the "Chiropractor Appointment", calendar event information is retrieved from the calendar database stored in flash memory 142 at the portable electronic device 120. For the purposes of the present example, the calendar event information that is retrieved includes all information relating to calendar events that are scheduled within two days of the target date and time. In the present example, the target date and time is the 17^{th} at 10:00 AM for the following month (February). Thus, the calendar event information is retrieved for all times between 10:00 AM on the 15^{th} of February and 10:00 AM on the 19^{th} of February (step 184). Next, the free time periods between February 15^{th} at 10:00 AM and February 19^{th} at 10:00 AM that accord with the user-defined constraints are determined (step 186). February 17^{th}, 2007, however, falls on a Saturday. As shown in Figure 15, the user-defined constraints are set such that the "Chiropractor Appointment" is never scheduled on a Saturday or a Sunday. Thus, free time periods are determined that do not fall on the Saturday or the Sunday.

The duration of each free time period is then determined and the duration of the free time periods are compared to the duration of the "Chiropractor Appointment", which is defined as being one hour, as shown in Figure 15, for example (step 188). If only one free time period that is greater than or equal in duration to the duration of the "Chiropractor Appointment" is determined, the "Chiropractor Appointment" is suggested for that free time period (step 194) by providing a prompt for user-confirmation of the next occurrence of the recurring calendar event. On the other hand, if more than one free time period is determined, the free time period closest to the target date and time of February 17 at 10:00 AM is determined at step 192. In the present example, the closest free time period that is of suitable duration, is determined to be Friday, February 16, 2007, beginning at 10:00 AM and ending at 11:00 AM. In the present example, the appointment is suggested for scheduling within the free time period such that it falls closest to the target date and time.

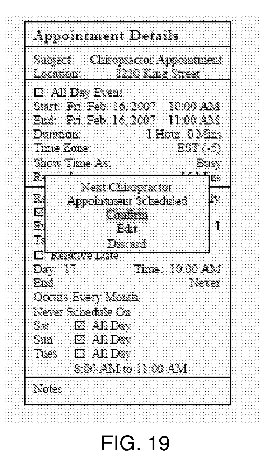

The user is notified of the suggested scheduling of the next occurrence of the recurring "Chiropractor Appointment" and is prompted to confirm the appointment, as shown in Figure 19 (step 194). Thus, a prompt is provided for user-confirmation, for editing the scheduled time, or for discarding the suggested next occurrence of the recurring calendar event. The "Chiropractor Appointment" is scheduled at step 196 with user selection of the "Confirm" option. In the present example, the user can book the appointment with the chiropractor prior to confirming. Selection of the "Confirm" option in the exemplary screen shown in Figure 19 saves and thereby schedules the next occurrence of the "Chiropractor Appointment" while selection of the "Edit" option opens the next occurrence of the "Chiropractor Appointment" for editing the calendar event details. Selection of the "Discard" option discards the suggested next occurrence of the recurring "Chiropractor Appointment".

It will be appreciated that the "Chiropractor Appointment" is scheduled for March, only upon determination of the start date and time of the February occurrence of the calendar event. Thus, each occurrence of the calendar event is only scheduled upon determination of the previous occurrence of the calendar event. In the example above, each occurrence is scheduled at the start date and time of the previous occurrence of the calendar event. It will be understood that each occurrence can be scheduled at, for example the end date and time of the previous occurrence or any other suitable time.

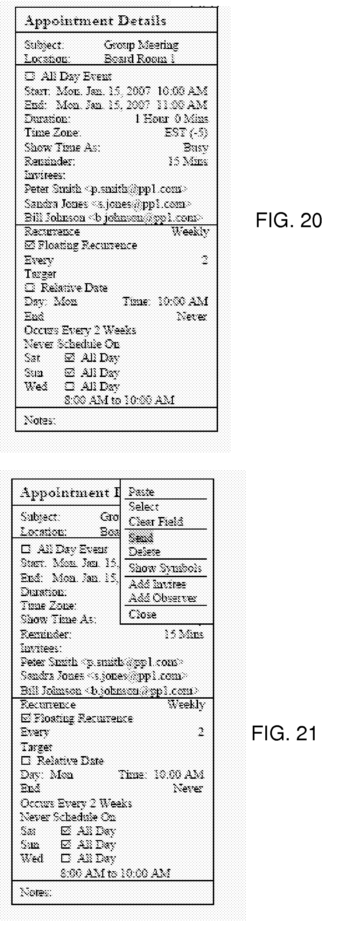

Reference is again made to Figure 5 to describe another example, which is provided for the purpose of further illustration only and is not intended to limit the scope of the present application. Again, the Calendar application is selected form the menu screen resulting in receipt of the selection at the portable electronic device 120 (Step 170) and the causing the execution of the calendar application (step 172). The "New" option is again selected from the submenu in the calendar display, as shown in Figure 7 (Step 174) and a graphical user interface for composition of a new calendar event is provided (step 176). The calendar details are received by user-input of the details in each of the fields of the new calendar event (step 178). As shown in the exemplary calendar screen of Figure 20, a "Group Meeting" is scheduled with a start date and time of Mon. Jan. 15, 2007 at 10:00 AM and an end date and time of Mon. Jan 15, 2007 at 11:00 AM. In the present example, the addition of calendar event details includes the addition of three invitees (Peter Smith, Sandra Jones and Bill Johnson) to the calendar event. The calendar event is scheduled as a recurring calendar event with a "Floating Recurrence". In the present example, however, the "Group Meeting" is scheduled to recur every 2 weeks as the recurrence selected is "Weekly" and the frequency ("Every") is 2 (every two weeks). Again, recurrence constraints are set by selection of rules for recurrence. In the present example, the constraints include rules such that the "Group Meeting" is never scheduled on a Wednesday between 8:00 AM and 10:00 AM and never scheduled on a Saturday or a Sunday.

As indicated, the calendar event includes invitees and therefore, rather than selecting a "Save" option to save the appointment details, a "Send" option is selected, as shown in Figure 21, to save the appointment details and send an invitation to the invitees. It will be appreciated that the invitation is sent by e-mail to electronic devices of the invitees where a prompt is provided for the invitees to accept the invitation or decline the invitation.

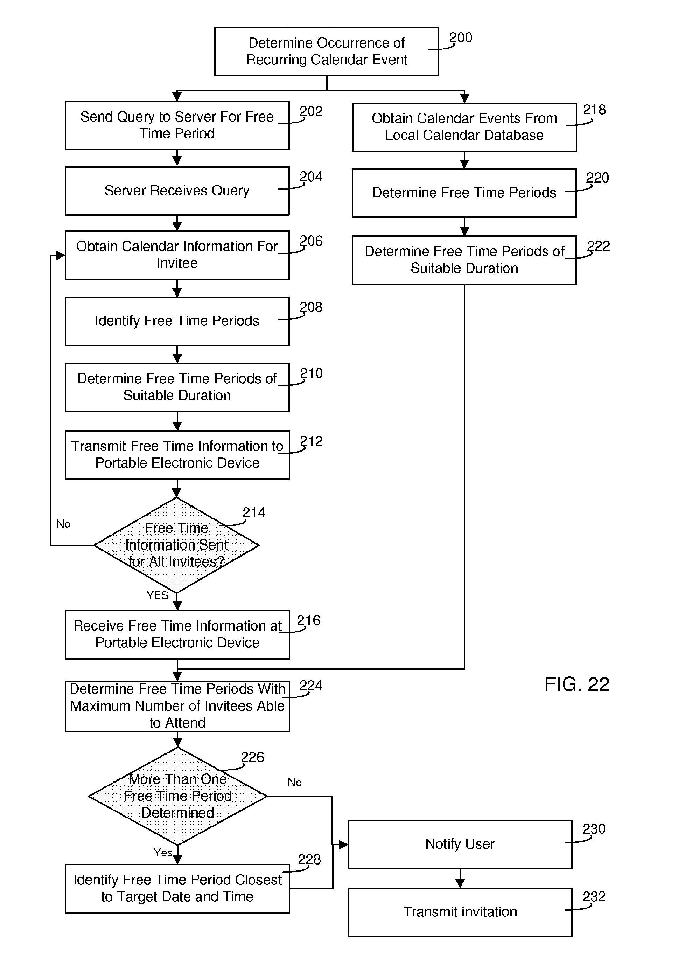

Reference is now made to Figure 22 to describe a method of scheduling a recurring calendar event according to another aspect of an embodiment. It will be appreciated that the steps described in relation to Figure 22 are carried out by routines or subroutines of the portable electronic device 120. Coding of software for carrying out such steps is well within the scope of a person of ordinary skill in the art. First, the portable electronic device 120 determines the occurrence of a recurring event based on the current time according to the clock signal from the main oscillator 160 at step 200. The determination of the occurrence of the calendar event can be the determination of the end of the occurrence of the calendar event. Alternatively, the determination of the occurrence of the calendar event can be the determination of the start of the occurrence of the calendar event, or any other suitable time such as during or after the calendar event. Upon the determination at step 200, a query is sent to the enterprise server 116 for free time information based on the scheduled calendar events for each of the invitees at step 202. The query includes constraints for a specific time period in which the next target date and time falls, along with the user-defined constraints for scheduling the recurring event and a duration of the recurring event.

The query is received at the communication system 106 and passed on to the enterprise server 116 at step 204. The server then obtains the calendar event information for an invitee from a respective calendar database 119 through a respective PIM connector 118. Next, the enterprise server 116 determines free time periods that accord with the user-defined constraints for scheduling the recurring event. As described above with reference to Figure 5, the free time periods are determined by determining all the time periods during which there are no scheduled calendar events and during which there is no conflict with a user-defined constraint, beginning at the start date and time of the specific time period and ending at the end date and time of the specific time period at step 208. Again, it will be appreciated that the free time periods can be calculated for the entire duration of the specific time period or can be calculated only during a defined calendar day (between a beginning and end time of each calendar day based on user-defined calendar day parameters). The free time periods are determined by determining the start date and time of each free time period based on the start date and time of the specific time period, the start date and time of each calendar day, the end date and time of each non-conflicting calendared event or user-defined constraint and the last end date and time of conflicting calendared events and user-defined constraints. The end date and time of each free time period is then determined by determining the next one of a start date and time of a calendared event or user-defined constraint, an end date and time of a calendar day and the end date and time of the specific time period, after the start date and time for each free time period. It will be appreciated that the user-defined constraints are treated in a similar manner to calendar events in that the user-defined time periods for not scheduling events are not considered to be free time.

The duration of each of the free time periods is determined and then compared with the duration of the recurring calendar event to determine those free time periods that are greater in duration or equal in duration to the user-defined duration of the recurring calendar event at step 210. The free time periods determined to be greater or equal in duration to the duration of the recurring calendar event are then transmitted to the portable electronic device 120 at step 212. The process of obtaining calendar information for an invitee, identifying free time periods, determining which of those free time periods are greater or equal in duration to the duration of the recurring calendar event, and transmitting free time period information is repeated for each invitee (step 214). The free time period information is received at the portable electronic device 120 at step 216.

The portable electronic device 120 also obtains calendar information from the calendar database stored in flash memory 142 at the portable electronic device 120 at step 218. The calendar information retrieved includes calendar information for calendar events during the specific time period referred to above. Free time periods within the specific time period, that accord with the user-defined constraints, are determined at step 220. The duration of those free time periods is then compared with the duration of the recurring calendar event to determine those free time periods that are greater in duration or equal in duration to the user-defined duration of the recurring calendar event at step 222.

Next, the free time periods for each of the invitees (including the person who originally scheduled the calendar event, also referred to herein as the organizer), are compared to determine a free time period in which a maximum number of invitees are able to attend by determining a free time period that is shared by a maximum number of invitees at step 224. At step 226, it is determined if there is more than one free time period identified that is shared by a maximum number of invitees at step 224. If so, then the free time period shared by a maximum number of invitees that is closest to the target date and time is determined at step 228 for scheduling of the next occurrence of the recurring calendar event. A notification is provided on the portable electronic device 120 (of the organizer) by, for example, providing a visual prompt to the user for confirmation, at step 230 and the next occurrence of the recurring calendar event is scheduled at step 232. In the present embodiment, the next occurrence of the recurring calendar event is scheduled by saving the next occurrence details in the calendar database for display in a calendar view on the portable electronic device 120 and by transmitting invitations to each of the invitees of the calendar event at step 232.

Another specific example will now be provided for the purpose of illustration only and is not intended to limit the scope of the present application. The present example is continued from the example provided above relating to the "Group Meeting". In the present example, it is determined at step 200 that the current date and time according to the clock signal from the main oscillator 160 of the portable electronic device 120 is equivalent to the end date and time of the "Group Meeting" as described with reference to Figures 20 and 21. Thus, the occurrence of the "Group Meeting" is determined at the end date and time, Mon. Jan. 15 at 11:00 AM.

Upon determination of the occurrence of the "Group Meeting", a query is sent to from the portable electronic device 120 to the enterprise server 116. The query acts as a request for free time information for the week including the target date and time for the next occurrence of the "Group Meeting". In the present example, the target date and time is Monday January 29 (two weeks from the "Group Meeting" determined at step 200) at 10:00 AM. Thus, for the exemplary purposes, the query is a query for free time information for the week period in which Monday January 29 falls. The query also includes the user-defined constraints and the duration of the "Group Meeting" (one hour).

The enterprise server 116 receives the query (step 204) and, for the first invitee, Peter Smith, the enterprise server 116 obtains calendar information for the week including the target date and time for the next occurrence of the "Group Meeting" (step 206). From the calendar information for the invitee, Peter Smith, free time periods are determined within the week time period that accord with the user-defined constraints (Step 208). In the present example, the user defined constraints include rules such that the "Group Meeting" is not scheduled between 8:00 AM and 10:00 AM on Wednesdays and all day on Saturdays and Sundays. The duration of the free time periods determined at step 208 is then determined and compared to the duration of the "Group Meeting" (Step 210). Information including start date and time and end date and time for each of the free time periods that are determined to be greater than or equal in duration to one hour, is transmitted to the portable electronic device 120 (step 212) and the process of obtaining calendar information, determining free time periods that accord with user-defined constraints, comparing durations and transmitting is repeated for the each invitee (step 214). The free time information for each invitee is received at the portable electronic device 120 (step 216).

The calendar information for the organizer of the "Group Meeting" is also retrieved from the calendar database at the portable electronic device 120 (step 218) and free time periods are determined based on the calendar information retrieved and the user-defined constraints (step 220). Next, the duration of the free time periods determined at step 220 is compared with the 1 hour duration of the "Group Meeting" to determine those free time periods that are greater or equal in duration to the user-defined 1 hour duration of the "Group Meeting" (step 222).

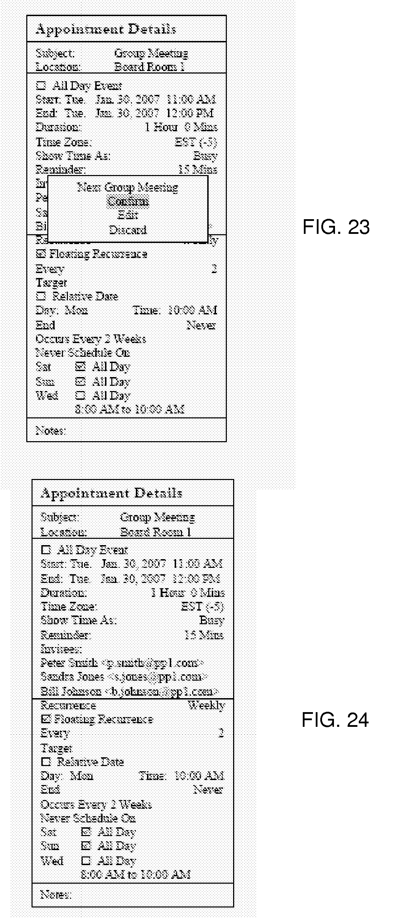

From the free time information for each invitee including the organizer, the free time periods are compared to determine an overlapping one hour period for a maximum number of invitees. A one hour period is used as this is the user-defined duration of the "Group Meeting". Thus, a time period is determined in which a maximum number of invitees including the organizer, do not have conflicting calendared events and therefore can attend the meeting (step 224). If there is more than one time period in which a maximum number of invitees including the organizer can attend the "Group Meeting", the time that is closest to the target date and time is selected (step 224). Thus, if it is determined that there is no time in which all of the invitees can attend a meeting, it is then determined if there are times in which 3 of the 4 invitees and organizer can attend the meeting. If there are, for example, two time periods identified in which 3 of the 4 can attend (step 226), these two time periods are compared with the target date and time to determine the closest time period to the target date and time (step 228). In the example shown in Figure 23, the closest time period to the target date and time in which a maximum number of invitees can attend the "Group Meeting" is determined to be Tue. Jan, 30, beginning at 11:00 AM.

Next, the notification is provided in the form of a prompt as shown in Figure 23, for user confirmation (step 230) and upon user selection of the "Confirm" option, the next occurrence (Tue. Jan. 30, 2007) is saved in the calendar database for display in a calendar view on the portable electronic device 120 and an invitation is sent out to each of the invitees (step 232). If, on the other hand, the user selects the "Edit" option from the prompt shown in Figure 23, the next occurrence of the "Group Meeting" is opened from editing. The user then saves the edited "Group Meeting" to schedule the "Group Meeting" by saving to the calendar database at the portable electronic device 120 and sending out invitations to each of the invitees (step 232).

It will be appreciated that the next "Group Meeting" is scheduled only upon determination of the end date and time of the Jan. 30 occurrence of the "Group Meeting". Thus, each occurrence of the calendar event is only scheduled upon determination of the previous occurrence of the calendar event. In the example above, each occurrence is scheduled at the end date and time of the previous occurrence of the calendar event. It will be understood that each occurrence can be scheduled at, for example the start date and time of the previous occurrence or any other suitable time.

In the above-described embodiment, the enterprise server 216 provides the free time information to the portable electronic device 120. It will be appreciated that the calendar event information can be provided to the portable electronic device 120 and the determination of free times for the invitees can be carried out at the portable electronic device 120. Thus, the query sent to the enterprise server 116 is simply a query for all calendar events in a specific time period. In any case, permissions are set to allow the organizer of the "Group Meeting" to access the calendar information. Although not described above, it is possible that certain invitees or the organizer can be indicated for mandatory attendance. Thus, the "Group Meeting" is only scheduled during free time periods determined for those persons indicated for mandatory attendance.

In the above-described embodiments, the free time period that is closest to the target date and time is chosen when more than one free time period is identified. It is possible that the free time period can be chosen based on a number of factors. In one example, free time periods that are closest to the target date can be identified first. Next, of those free time periods closest to the target date, the free time period that is closest to a target time can be determined for scheduling the calendar event. It will also be appreciated that there can be other ways of defining constraints and, for example, a work week can be defined so that calendar events are scheduled only within that work week.

In the example described above relating to the "Chiropractor Appointment", the appointment is scheduled and the user of the portable electronic device 120 coordinates with the chiropractor's office, for example. It is possible that certain offices such as a chiropractor's, dentists, or doctor's offices or event garages for oil changes, for example, can publish free or busy data over a service. It is contemplated that the portable electronic device 120 can use this free or busy data to schedule an appointment during shared free times of suitable length.

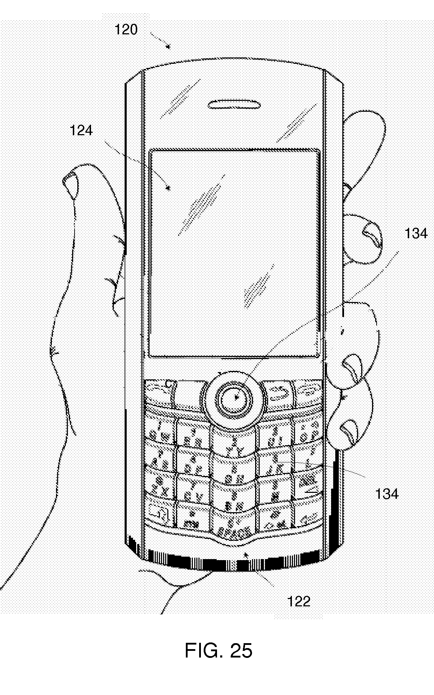

It will be appreciated that the portable electronic device of Figure 2 is shown for exemplary purposes only. Other portable electronic devices such as that shown in Figure 25 are possible. Referring to Figure 25, another exemplary portable electronic device 120 is shown. The portable electronic device 120 includes a housing 122 that frames an LCD display 124. In the present example, however, the portable electronic device 120 includes a trackball 131, rather than a trackwheel. The trackball 131 can be depressed as a means to provide additional user-input. The microprocessor 138 receives input from the trackball 131 which is used for user selection of features from a list or a table on the LCD display 124 of the portable electronic device 122. Selection is carried out by rolling the trackball 131 to roll a cursor (or highlighted region), for example, to the desired selection and pressing inwardly on the trackball 131. The portable electronic device 120 shown in Figure 25 includes many other features, including, for example, a key pad 134 and other features similar to those described above with reference to Figure 2. It will also be appreciated that reference is made to a trackwheel in the above description for exemplary purposes only, and a trackball 131 such as that shown in Figure 25 can be used.

While embodiments described herein are described by way of particular examples, it will be understood that modifications and variations to these examples are well within the scope and sphere of the present application. For example, it will be appreciated that the screens provided herein are provided for exemplary purposes only and the screens can differ. As indicated, the portable electronic device can also differ while still performing the same functions. The options provided and selection of options from menus and submenus can vary while similar functions are still performed by the portable electronic device. Many other modifications and variations may occur to those skilled in the art. All such modifications and variations are believed to be within the sphere and scope of the present application.

## Claims

1. A method of scheduling a recurring calendar event using an electronic device, the method comprising:
receiving constraints for said recurring calendar event;
determining an occurrence of said recurring calendar event;
determining a free time period that meets said constraints for scheduling a next occurrence of said recurring calendar event; and
scheduling said next occurrence of said recurring calendar event during said free time period that meets said constraints.

2. The method according to claim 1, wherein said receiving constraints comprises receiving user-defined rules for scheduling said recurring calendar event.

3. The method according to claim 1 or claim 2, wherein said determining a free time period comprises determining free time periods that accord with said constraints and determining one of said free time periods that is closest to a user-defined target date and time.

4. The method according to any one of claims 1 to 3, comprising receiving information from a calendar of an invitee, wherein said determining a free time period comprises determining a time period in which a calendar at said electronic device and said calendar of said invitee are both absent a calendared event.

5. The method according to any one of the preceding claims, comprising sending a query to a server for calendar information from a calendar of an invite and receiving said calendar information from said calendar of said invitee.

6. The method according to any one of claims 1 to 3, comprising receiving information from calendars of a plurality of invitees, wherein said determining a free time period comprises determining a time period in which a maximum number of said calendars of said plurality of invitees are absent calendared events.

7. The method according to any one of the preceding claims, comprising providing a notification of said next occurrence of said recurring calendar event.

8. The method according to claim 7, wherein said providing said notification comprises providing a prompt for user-confirmation of said next occurrence of said recurring calendar event.

9. The method according to any one of the preceding claims, comprising saving said next occurrence to a calendar at said electronic device, wherein said scheduling said next occurrence of said recurring calendar event comprises transmitting an invitation to each invitee of said next occurrence of said recurring calendar event.

10. The method according to any one of the preceding claims, wherein said scheduling said next occurrence of said recurring calendar event comprises saving to a local calendar, said next occurrence of said recurring calendar event.

11. The method according to any one of the preceding claims, wherein said determining an occurrence of said recurring calendar event comprises determining an end of said occurrence of said recurring calendar event.

12. The method according to any one of claims 1 to 10, wherein said determining an occurrence of said recurring calendar event comprises determining a start of said occurrence of said recurring calendar event.

13. The method according to any one of the preceding claims, wherein said receiving constraints comprises receiving at least one user-defined rule to preclude scheduling said recurring calendar event during an associated period of time.

14. The method according to claim 13, wherein said associated period of time comprises a day and/or a defined period of time within a day.

15. A portable electronic device for scheduling a recurring calendar event, the portable electronic device comprising:
a memory;
a microprocessor connected to the memory; and
an application stored in the memory, said application for execution by the microprocessor for causing said portable electronic device to perform the method of any one of claims 1 to 14.

16. A computer program product for an electronic device, the computer program product comprising a computer-readable medium having computer-readable code embodied therein for causing the electronic device to perform the method of any one of claims 1 to 14.

## Amended claims

### Amended claims in accordance with Rule 137(2) EPC.

**1.** A method of scheduling a recurring calendar event using an electronic device (120), the method comprising:
receiving (184) data representing an occurrence of said recurring calendar event where said occurrence does not accord with at least one of a plurality of constraints associated with said recurring calendar event;
determining (186-192) a free time period from one of a plurality of free time periods surrounding said occurrence that each accord with said constraints ;
providing (194) a notification requesting confirmation to schedule said occurrence during said free time period; and
scheduling (196) said occurrence during said free time period if confirmation is received in response to said notification.

**2.** The method according to claim 1, wherein said constraints comprise user-defined rules for scheduling said recurring calendar event.

**3.** The method according to claim 1 or claim 2, wherein said determining a free time period comprises determining (192) one of said free time periods that is closest to a user-defined target date and time.

**4.** The method according to any one of claims 1 to 3, wherein said recurring calendar event includes a day of a month when said recurring event is targeted to occur and said at least one constraint includes a day of a week when said occurrence can never occur..

**5.** The method according to any one of the preceding claims, wherein each of said one of a plurality of free time periods and said recurring calendar event are equal in duration.

**6.** The method according to any one of the preceding claims wherein said free time period determined from said one of a plurality of free time periods is closest in time to said occurrence.

**7.** The method according to any one of the preceding claims further comprising determining another free time period from one of said one of a plurality of free time periods surrounding said occurrence;
providing another notification requesting confirmation to schedule said occurrence during said another free time period; and,
scheduling said occurrence during said another free time period if confirmation is received in response to said another notification.

**8.** The method according to claim 7, wherein said providing (194) said notification comprises providing a prompt for user-confirmation of said occurrence of said recurring calendar event.

**9.** The method according to any one of claims 4 to 8, comprising saving said occurrence to a calendar at said electronic device (120).

**10.** The method according to any one of the preceding claims, wherein said scheduling (196) said occurrence of said recurring calendar event comprises saving to a local calendar, said occurrence of said recurring calendar event.

**11.** The method according to any one of the preceding claims, wherein said data representing an occurrence of said recurring calendar event includes an end of said occurrence of said recurring calendar event.

**12.** The method according to any one of claims 1 to 10, wherein said data representing an occurrence of said recurring calendar event includes a start of said occurrence of said recurring calendar event.

**13.** The method according to any one of the preceding claims, wherein said constraints comprises at least one user-defined rule to preclude scheduling said recurring calendar event during an associated period of time.

**14.** The method according to claim 13, wherein said associated period of time comprises a day and/or a defined period of time within a day.

**15.** A portable electronic device (120) for scheduling a recurring calendar event, the portable electronic device comprising:
a memory (140, 142);
a microprocessor (138) connected to the memory; and
an application stored in the memory, said application for execution by the microprocessor for causing said portable electronic device to perform the method of any one of claims 1 to 14.

**16.** A computer program product for an electronic device, the computer program product comprising a computer-readable medium having computer-readable code embodied therein for causing the electronic device to perform the method of any one of claims 1 to 14.
